# EUROPÄISCHE PATENTANMELDUNG

(11) **EP 4 641 326 A1**
(43) Veröffentlichungstag der Anmeldung: **29.10.2025**
(21) Anmeldenummer: 24171880.8
(22) Anmeldetag: 23.04.2024
(51) Int. Cl.: G05B 19/05

(54) **ÜBERWACHUNGSSYSTEM FÜR EINE SPEICHERPROGRAMMIERBARE STEUERUNG**

(71) Anmelder: Siemens Aktiengesellschaft, 80333 München (DE)
(72) Erfinder: Denk, Martin, 85256 Vierkirchen (DE); Haager, Dominik, 83052 Bruckmühl (DE)
(74) Vertreter: Siemens Patent Attorneys

(57) **Zusammenfassung**

Die Erfindung betrifft ein Überwachungssystem für eine erste speicherprogrammierbare Steuerung zum Steuern eines technischen Systems, wobei die erste speicherprogrammierbare Steuerung ein erstes Programm aus einer Vielzahl von Bausteinen umfasst, umfassend:
• eine erste Prüfeinheit, die derart eingerichtet ist, eine erste Prüfsumme über mindestens einen Übergabewert und/oder einen Zustand eines ersten Bausteins des ersten Programms zu bilden,
• eine zweite Prüfeinheit, die derart eingerichtet ist, eine zweite Prüfsumme über mindestens einen Übergabewert und/oder einen Zustand eines dem ersten Baustein entsprechenden zweiten Bausteins eines zweiten Programms einer zweiten speicherprogrammierbaren Steuerung zu bilden, wobei die zweite speicherprogrammierbare Steuerung betriebsparallel zur ersten speicherprogrammierbaren Steuerung betrieben wird und das zweite Programm dem ersten Programm entspricht,
• eine Analyseeinheit, die derart eingerichtet ist, die erste Prüfsumme mit der zweiten Prüfsumme zu vergleichen und ein Vergleichsergebnis auszugeben,
• und
• eine Ausgabeeinheit, die derart eingerichtet ist, eine Warnmeldung für die erste speicherprogrammierbare Steuerung auszugeben, falls sich die erste Prüfsumme und die zweite Prüfsumme unterscheiden.

## Beschreibung

Die Erfindung betrifft ein Überwachungssystem und ein computerimplementiertes Verfahren sowie ein Computerprogrammprodukt zur Überwachung einer speicherprogrammierbaren Steuerung.

Gezielte Attacken, wie z.B. Cyberangriffe, Defekte in Bauteilen und/oder Fehler in der Kompilierung der Firmware, können Abläufe in einer speicherprogrammierbaren Steuerung (SPS; engl. "Programmable Logic Controller", PLC) verändern. Fehler in der Steuerung können zu Maschinenstillstandzeiten führen. Außerdem stellt eine fehlerhafte Steuerung ein erhebliches Sicherheitsrisiko dar.

Es ist daher eine Aufgabe der vorliegenden Erfindung, Abweichungen im Programmablauf einer speicherprogrammierbaren Steuerung zu erkennen.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt.

Gemäß einem ersten Aspekt betrifft die Erfindung ein Überwachungssystem für eine erste speicherprogrammierbare Steuerung zum Steuern eines technischen Systems, wobei die erste speicherprogrammierbare Steuerung ein erstes Programm aus einer Vielzahl von Bausteinen umfasst,
und das Überwachungssystem umfasst:
- eine erste Prüfeinheit, die derart eingerichtet ist, eine erste Prüfsumme über mindestens einen Übergabewert und/oder einen Zustand eines ersten Bausteins des ersten Programms zu bilden,
- eine zweite Prüfeinheit, die derart eingerichtet ist, eine zweite Prüfsumme über mindestens einen Übergabewert und/oder einen Zustand eines dem ersten Baustein entsprechenden zweiten Bausteins eines zweiten Programms einer zweiten speicherprogrammierbaren Steuerung zu bilden, wobei die zweite speicherprogrammierbare Steuerung betriebsparallel zur ersten speicherprogrammierbaren Steuerung betrieben wird und das zweite Programm dem ersten Programm entspricht,
- eine Analyseeinheit, die derart eingerichtet ist, die erste Prüfsumme mit der zweiten Prüfsumme zu vergleichen und ein Vergleichsergebnis auszugeben, und
- eine Ausgabeeinheit, die derart eingerichtet ist, eine Warnmeldung für die erste speicherprogrammierbare Steuerung auszugeben, falls sich die erste Prüfsumme und die zweite Prüfsumme unterscheiden.

Es ist ein Vorteil der vorliegenden Erfindung, dass eine speicherprogrammierbare Steuerung im Betrieb, d.h. während des Programmablaufs, überwacht werden kann und betriebsparallel Abweichungen vom Sollzustand erkannt werden können. Dazu werden Prüfsummen, beispielsweise Hashwerte, der Abläufe gespeichert und miteinander verglichen. Somit können Defekte an Anlagenbauteilen, Fehlabläufe, oder Attacken gezielt geortet und erkannt werden.

In einer vorteilhaften Ausführungsform kann die zweite speicherprogrammierbare Steuerung auf einer Recheneinheit virtuell realisiert sein.

Vorzugsweise wird die erste speicherprogrammierbare Steuerung auf einer Recheneinheit (CPU) gespiegelt und diese virtuelle zweite speicherprogrammierbare Steuerung kann dann zur Überwachung der ersten speicherprogrammierbaren Steuerung genutzt werden.

In einer weiteren Ausführungsform kann das Überwachungssystem eine Simulationseinheit umfassen, die derart eingerichtet ist, das technische System mittels einer computergestützten Simulation zu simulieren.

Beispielsweise kann die Simulation des technischen Systems mit der zweiten speicherprogrammierbaren Steuerung angesteuert werden und Rückgabewerte der Simulation können für die Überwachung genutzt werden.

In einer weiteren Ausführungsform kann die Analyseeinheit eingerichtet sein, die erste und die zweite Prüfsumme für einen definierten Zeitraum des Programms zu vergleichen.

Dies hat den Vorteil, dass ein Versatz aufgrund von einer Latenz in der Verbindung oder einer Rechengeschwindigkeit o.ä. kompensiert werden kann.

In einer weiteren Ausführungsform können die erste Prüfsumme und die zweite Prüfsumme mittels des Luhn-Algorithmus gebildet werden.

In einer weiteren Ausführungsform können die erste und die zweite Prüfsumme bei mehr als einem Funktionsaufruf in einem Baustein über eine Aneinanderreihung der Übergabewerte der jeweiligen Funktionsaufrufe gebildet werden.

Gemäß einem zweiten Aspekt betrifft die Erfindung ein computerimplementiertes Verfahren zur Überwachung einer ersten speicherprogrammierbaren Steuerung zum Steuern eines technischen Systems, wobei die erste speicherprogrammierbare Steuerung ein erstes Programm aus einer Vielzahl von Bausteinen umfasst, mit den Verfahrensschritten:
- Bilden einer ersten Prüfsumme über mindestens einen Übergabewert und/oder einen Zustand eines ersten Bausteins des ersten Programms,
- Bilden einer zweiten Prüfsumme über mindestens einen Übergabewert und/oder einen Zustand eines dem ersten Baustein entsprechenden zweiten Bausteins eines zweiten Programms einer zweiten speicherprogrammierbaren Steuerung, wobei die zweite speicherprogrammierbare Steuerung betriebsparallel zur ersten speicherprogrammierbaren Steuerung betrieben wird und das zweite Programm dem ersten Programm entspricht,
- Vergleichen der ersten Prüfsumme mit der zweiten Prüfsumme,
- Ausgeben eines Vergleichsergebnisses, und
- Ausgeben einer Warnmeldung für die erste speicherprogrammierbare Steuerung, falls sich die erste Prüfsumme und die zweite Prüfsumme unterscheiden.

In einer weiteren Ausführungsform kann die Überwachung von Bausteinen eines ersten Programms gemäß einer Hierarchiestruktur dieser Bausteine durchgeführt werden.

Vorzugsweise erfolgt ein Abgleich auf einer übergeordneten Programmebene. Im Fall einer Abweichung wird anschließend die darunterliegende Ebene untersucht. Auf diese Weise kann ein fehlerhafter Baustein gezielt erkannt werden. Vorzugsweise erfolgt die Überwachung iterativ.

Des Weiteren betrifft die Erfindung ein Computerprogrammprodukt, das direkt in einen programmierbaren Computer ladbar ist, umfassend Programmcodeteile, die bei der Ausführung des Programms durch einen Computer diesen veranlassen, die Schritte eines erfindungsgemäßen Verfahrens auszuführen.

Ein Computerprogrammprodukt kann beispielsweise auf einem Speichermedium, wie z.B. Speicherkarte, USB-Stick, CD-ROM, DVD, ein nichtflüchtiger/dauerhaftes Speichermedium (engl. Non-transitory storage Medium) oder auch in Form einer herunterladbaren Datei von einem Server in einem Netzwerk bereitgestellt oder geliefert werden.

Ausführungsbeispiele des erfindungsgemäßen Überwachungssystems und Verfahrens sind in den Zeichnungen beispielhaft dargestellt und werden anhand der nachfolgenden Beschreibung näher erläutert. Es zeigen:
Fig. 1: zeigt ein erstes Ausführungsbeispiel des erfindungsgemäßen Überwachungssystems für eine erste speicherprogrammierbare Steuerung;
Fig. 2: zeigt ein zweites Ausführungsbeispiel des erfindungsgemäßen Überwachungssystems für eine erste speicherprogrammierbare Steuerung; und
Fig. 3: zeigt ein Ausführungsbeispiel eines erfindungsgemäßen computerimplementierten Verfahrens zur Überwachung einer speicherprogrammierbaren Steuerung.

Einander entsprechende Teile sind in allen Figuren mit den gleichen Bezugszeichen versehen.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem (einschlägigen) Fachmann in Kenntnis des/der Verfahrensanspruchs/Verfahrensansprüche alle im Stand der Technik üblichen Möglichkeiten zur Realisierung der Erfindung selbstverständlich bekannt, sodass es insbesondere einer eigenständigen Offenbarung in der Beschreibung nicht bedarf.

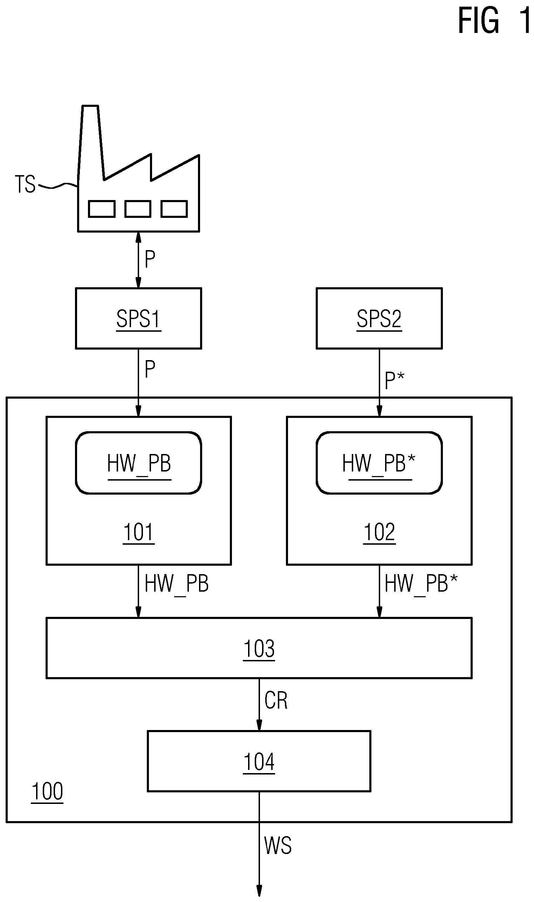

Figur 1 zeigt ein erstes Ausführungsbeispiel eines erfindungsgemäßen Überwachungssystems 100 zur Überwachung einer ersten speicherprogrammierbaren Steuerung SPS1.

Die erste speicherprogrammierbare Steuerung SPS1 ist dazu eingerichtet, ein technisches System TS zu steuern. Dazu läuft auf der ersten speicherprogrammierbaren Steuerung SPS1 ein erstes Programm P, das eine Vielzahl von Bausteinen/Funktionsbausteinen, die eine hierarchische Programmstruktur aufweisen. Die Überwachung durch das Überwachungssystem 100 kann gemäß dieser Hierarchiestruktur durchgeführt werden.

Das technische System TS kann beispielsweise eine Maschine in einer Automatisierungsanlage, wie z.B. eine Produktionsanlage, sein.

Das Überwachungssystem 100 ist mit der ersten speicherprogrammierbaren Steuerung SPS1 gekoppelt, so dass das Überwachungssystem 100 das erste Programm P überwachen kann.

Das Überwachungssystem 100 umfasst eine erste Prüfeinheit 101, eine zweite Prüfeinheit 102, eine Analyseeinheit 103 und eine Ausgabeeinheit 104. Vorzugsweise umfasst das Überwachungssystem 100 mindestens einen Prozessor. Das Überwachungssystem 100 kann auf einem Edge-Gerät, einem Consumer-PC, einem Server oder in der Cloud realisiert sein.

Zur Überwachung des Programmablaufs der ersten speicherprogrammierbaren Steuerung SPS1 wird eine zweite speicherprogrammierbare Steuerung SPS2 betriebsparallel betrieben. Die zweite speicherprogrammierbare Steuerung SPS2 wird dabei insbesondere unabhängig von der ersten speicherprogrammierbare Steuerung SPS1 betrieben, d.h., es findet vorzugsweise keine Kopplung bzw. kein Datenaustausch zwischen den beiden speicherprogrammierbaren Steuerungen SPS1, SPS2 statt.

Die zweite speicherprogrammierbare Steuerung SPS2 umfasst exakt das gleiche Programm P* wie die erste speicherprogrammierbare Steuerung SPS1, d.h. das zweite Programm P* entspricht dem ersten Programm P. Die zweite speicherprogrammierbare Steuerung SPS2 kann insbesondere an eine Simulation des technischen Systems gekoppelt sein, so dass die Simulation die Übergabewerte bereitstellt.

Die zweite speicherprogrammierbare Steuerung SPS2 kann als physikalische zweite Steuerung oder virtuell realisiert sein.

Die erste Prüfeinheit 101 ist derart eingerichtet, eine erste Prüfsumme HW_PB über mindestens einen Übergabewert und/oder einen Zustand eines ersten Bausteins des ersten Programms P zu bilden. Beispielsweise kann ein Hash-Wert berechnet werden.

Die zweite Prüfeinheit 102 ist derart eingerichtet, eine zweite Prüfsumme HW_PB* über mindestens einen Übergabewert und/oder einen Zustand eines dem ersten Baustein entsprechenden zweiten Bausteins des zweiten Programms P* zu bilden.

Folglich werden die erste Prüfsumme HW_PB und die zweite Prüfsumme HW_PB* jeweils über sich entsprechende Bausteine des jeweiligen Programms P, P* gebildet. Die Prüfsummen können beispielsweise mittels des Luhn-Algorithmus gebildet werden. Bei mehr als einem Funktionsaufruf in einem Baustein können die erste Prüfsumme HW_PB bzw. die zweite Prüfsumme HW_PB* jeweils über eine Aneinanderreihung der Übergabewerte der jeweiligen Funktionsaufrufe gebildet werden.

Anschließend wird die erste Prüfsumme HW_PB mit der zweiten Prüfsumme HW_PB* in der Analyseeinheit 103 verglichen und ein Vergleichsergebnis CR wird and die Ausgabeeinheit 104 ausgegeben. Vorzugsweise werden die die erste Prüfsumme HW_PB und die zweite Prüfsumme HW_PB* für einen definierten Zeitraum des Programms verglichen. Das Vergleichsergebnis CR gibt entweder eine Übereinstimmung oder eine Abweichung aus. Im Fall einer Abweichung der zweiten Prüfsumme HW_PB* von der ersten Prüfsumme HW_PB kann von einem Fehler im Ablaufprogramm der ersten speicherprogrammierbaren Steuerung SPS1 ausgegangen werden.

Die Ausgabeeinheit ist derart eingerichtet, das Vergleichsergebnis CR auszugeben. Im Fall, dass sich die erste Prüfsumme HW_PB und die zweite Prüfsumme HW_PB* unterscheiden, wird eine Warnmeldung WS für die erste speicherprogrammierbare Steuerung SPS1 ausgegeben. Die Warnmeldung WS kann auch eine Fehlermeldung umfassen. Außerdem kann die Warnmeldung WS auch eine sofortige Beendigung des Programms P sein.

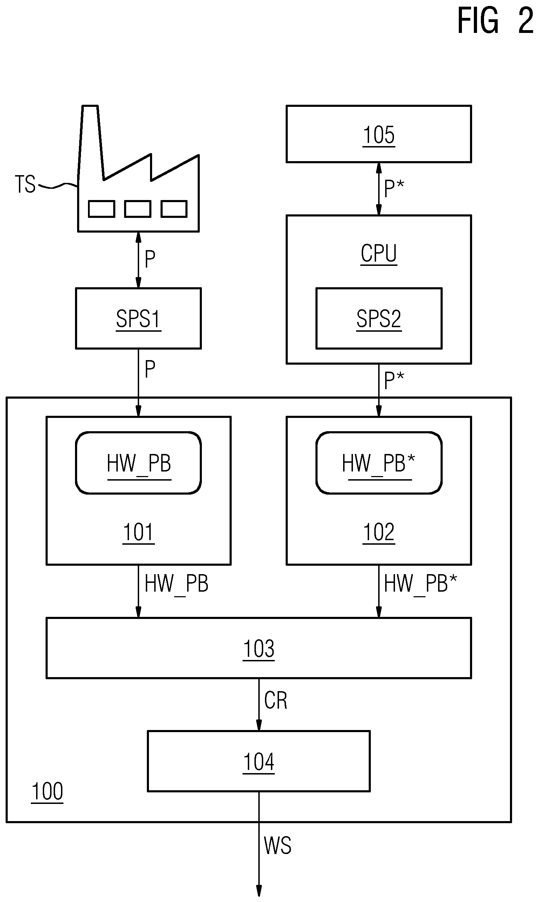

Figur 2 zeigt ein zweites Ausführungsbeispiel eines erfindungsgemäßen Überwachungssystems 100 zur Überwachung einer speicherprogrammierbaren Steuerung SPS1, die zum Steuern eines technischen Systems TS geeignet ist. Auf der speicherprogrammierbaren Steuerung SPS1 läuft zur Steuerung des technischen Systems TS ein erstes Programm P, dass eine Vielzahl von Bausteinen/Funktionsbausteinen umfasst.

Das Überwachungssystem 100 ist mit der speicherprogrammierbaren Steuerung SPS1 gekoppelt. Betriebsbegleitend zur speicherprogrammierbaren Steuerung SPS1 wird eine weitere speicherprogrammierbare Steuerung SPS2 virtuell auf einer Recheneinheit CPU realisiert.

Die virtuelle speicherprogrammierbare Steuerung SPS2 wird betriebsparallel zur speicherprogrammierbaren Steuerung SPS1 betrieben und umfasst ein Programm P*, das exakt dem ersten Programm P der (realen) speicherprogrammierbaren Steuerung SPS1 entspricht. Vorzugsweise kann das gespiegelte Programm P* der virtuellen speicherprogrammierbaren Steuerung SPS2 zeitgleich zum Programm P der speicherprogrammierbaren Steuerung SPS1 ablaufen.

Das Überwachungssystem 100 umfasst eine erste Prüfeinheit 101, die dazu eingerichtet ist, eine erste Prüfsumme HW_PB über mindestens einen Übergabewert und/oder einen Zustand eines ersten Bausteins des Programms P der speicherprogrammierbaren Steuerung SPS1 zu bilden. Die erste Prüfeinheit 101 kann insbesondere auch als Erweiterung des Programms P der speicherprogrammierbaren Steuerung SPS1 realisiert werden.

Das Überwachungssystem 100 kann außerdem eine Simulationseinheit 105 umfassen, die derart eingerichtet ist, das technische System TS mittels einer computergestützten Simulation zu simulieren. Vorzugsweise ist die Simulationseinheit 105 mit der virtuellen speicherprogrammierbaren Steuerung SPS2 gekoppelt, so dass die Simulation von der virtuellen speicherprogrammierbaren Steuerung SPS2 angesteuert werden kann. Demnach erhält die virtuelle speicherprogrammierbare Steuerung SPS2 Übergabe- bzw. Rückgabewerte von der Simulation.

Im Programm/Ablaufprogramm P gibt es verschiedene Bausteine, wie z.B. DBs, FCs und FBs. Alle diese Bausteine haben eine unterschiedliche Anzahl und Arten an Übergabewerten. Die Typen der Übergabewerte können z.B. Boolean, Float oder Integer Typen sein. Zusätzlich können auch interne Ablaufvariablen vorhanden sein. Für jeden Baustein kann nun eine Prüfsumme gebildet werden.

Dabei kann beispielsweise wie folgt vorgegangen werden:
- Übergabewerte können in Zahlwerte konvertiert werden, wie z.B. Boolean: true --> 1, false --> 0. Übergabewerte mit Typ "String" können beispielsweise nach dem Alphabetischen Prinzip umgewandelt: A --> 1, B → 2; etc.
- Mehrere Übergabewerte können aneinandergereiht werden, so dass ein individueller Zahlwert entsteht, wie z.B. Inputs: i1= true, i2 = false; Outputs o1= true, o2= "abc"; temp_flag=6 ergibt aneinandergereiht den Zahlwert 1011236.
- Eine Prüfsumme kann außerdem für einen Bereich gebildet werden, wobei zum Beispiel der Luhn Algorithmus verwendet werden kann.

Außerdem umfasst das Überwachungssystem 100 eine zweite Prüfeinheit 102, die dazu eingerichtet ist, eine zweite Prüfsumme HW_PB* über mindestens einen Übergabewert und/oder einen Zustand eines dem ersten Baustein entsprechenden zweiten Bausteins eines zweiten Programms P* einer zweiten speicherprogrammierbaren Steuerung SPS2 zu bilden. Übergabewerte bzw. Rückgabewerte können von der Simulationseinheit 105 bereitgestellt werden.

Somit wird der gleiche Ablauf/das gleiche Programm in der virtuellen speicherprogrammierbaren Steuerung SPS2 implementiert und hier auch wieder eine Prüfsumme aus den einzelnen Aufrufen erzeugt.

Anschließend können die jeweiligen Prüfsummen HW_PB, HW_PB* der realen und der virtuelle speicherprogrammierbaren Steuerung SPS1, SPS2 ausgelesen, z.B. via MQTT, OPCua, uvm. und in einer Datenbank gespeichert und von dort an die Analyseeinheit 103 übertragen werden.

In der Analyseeinheit 103 des Überwachungssystems 100 wird die erste Prüfsumme HW_PB mit der zweiten Prüfsumme HW_PB* verglichen und ein Vergleichsergebnis CR wird bereitgestellt. Vorzugsweise wird für einen definierten Zeitraum, der beispielsweise abhängig von der Latenz der Verbindung, Performance der CPUs, etc. sein kann, ein Satz der Prüfsummen von beiden Quellen verglichen. Sobald sich für jeden Baustein gleiche Prüfsummen im Speicher finden, kann davon ausgegangen werden, dass keine der beiden speicherprogrammierbaren Steuerungen SPS1, SPS2 gehackt oder verändert wurde.

Das Überwachungssystem 100 umfasst außerdem eine Ausgabeeinheit 104, die derart eingerichtet ist eine Warnmeldung auszugeben, falls sich die erste Prüfsumme HW_PB und die zweite Prüfsumme HW_PB* unterscheiden. Im Falle einer Übereinstimmung der ersten Prüfsumme HW_PB und der zweiten Prüfsumme HW_PB* kann das Vergleichsergebnis CR ausgegeben werden.

Vorzugsweise kann die Überwachung iterativ für die Bausteine des Programms durchgeführt werden. Um die Überwachung zu optimieren, kann diese gemäß einer Hierarchiestruktur der Bausteine durchgeführt werden.

Beispielsweise kann lediglich für übergeordnete Bausteine eine Prüfsumme errechnet werden. Im Falle einer Abweichung kann insbesondere nur ein entsprechender Zyklus weiter untersucht werden.

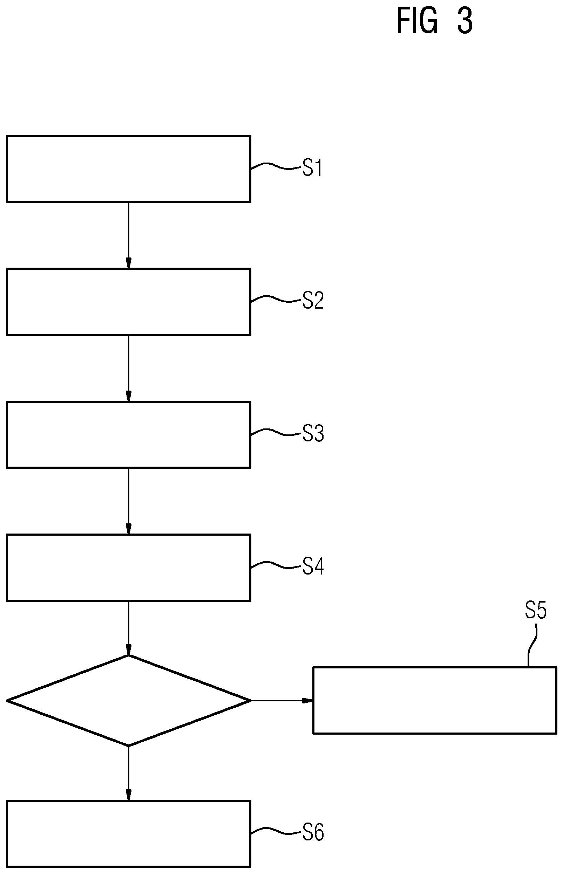

Figur 3 zeigt ein Ausführungsbeispiel eines erfindungsgemäßen, computerimplementierten Verfahrens zur Überwachung einer ersten speicherprogrammierbaren Steuerung zum Steuern eines technischen Systems, wobei die erste speicherprogrammierbare Steuerung ein erstes Programm aus einer Vielzahl von Bausteinen umfasst.

Das Verfahren umfasst folgende Verfahrensschritte:
In einem ersten Schritt S1 wird eine erste Prüfsumme über mindestens einen Übergabewert und/oder einen Zustand eines ersten Bausteins des ersten Programms gebildet.

In einem zweiten Schritt S2 oder parallel zum ersten Schritt wird eine zweite Prüfsumme über mindestens einen Übergabewert und/oder einen Zustand eines dem ersten Baustein entsprechenden zweiten Bausteins eines zweiten Programms einer zweiten speicherprogrammierbaren Steuerung gebildet. Dabei wird die zweite speicherprogrammierbare Steuerung betriebsparallel zur ersten speicherprogrammierbaren Steuerung betrieben. Das zweite Programm entspricht vorzugsweise exakt dem ersten Programm.

Vorzugsweise können die erste und die zweite Prüfsumme bei mehr als einem Funktionsaufruf in einem Baustein über eine Aneinanderreihung der Übergabewerte der jeweiligen Funktionsaufrufe gebildet werden.

In einem nächsten Schritt 3 wird die erste Prüfsumme mit der zweiten Prüfsumme verglichen. Vorzugsweise erfolgt ein Vergleich für einen definierten Zeitraum des Programms.

Anschließend im nächsten Schritt S4 wird das Vergleichsergebnis ausgegeben.

Im Falle einer Abweichung der ersten Prüfsumme von der zweiten Prüfsumme, Schritt S5, wird eine Warnmeldung für die erste speicherprogrammierbare Steuerung ausgegeben. Im Falle einer Übereinstimmung, Schritt S6, erfolgt eine Ausgabe des Prüfergebnisses.

Vorzugsweise kann das Verfahren mit den Schritten S1 bis S6 iterativ für verschiedene definierte Zeiträume ausgeführt werden.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Überwachungssystem (100) für eine erste speicherprogrammierbare Steuerung (SPS1) zum Steuern eines technischen Systems (TS), wobei die erste speicherprogrammierbare Steuerung (SPS1) ein erstes Programm (P) aus einer Vielzahl von Bausteinen umfasst, und das Überwachungssystem (100) umfasst:
• eine erste Prüfeinheit (101), die derart eingerichtet ist, eine erste Prüfsumme (HW_PB) über mindestens einen Übergabewert und/oder einen Zustand eines ersten Bausteins des ersten Programms zu bilden,
• eine zweite Prüfeinheit (102), die derart eingerichtet ist, eine zweite Prüfsumme (HW_PB*) über mindestens einen Übergabewert und/oder einen Zustand eines dem ersten Baustein entsprechenden zweiten Bausteins eines zweiten Programms (P*) einer zweiten speicherprogrammierbaren Steuerung (SPS2) zu bilden, wobei die zweite speicherprogrammierbare Steuerung (SPS2) betriebsparallel zur ersten speicherprogrammierbaren Steuerung (SPS1) betrieben wird und das zweite Programm (P*) dem ersten Programm (P) entspricht,
• eine Analyseeinheit (103), die derart eingerichtet ist, die erste Prüfsumme (HW_PB) mit der zweiten Prüfsumme (HW_PB*) zu vergleichen und ein Vergleichsergebnis (CR) auszugeben,
und
• eine Ausgabeeinheit (104), die derart eingerichtet ist, eine Warnmeldung (WS) für die erste speicherprogrammierbare Steuerung (SPS1) auszugeben, falls sich die erste Prüfsumme (HW_PB) und die zweite Prüfsumme (HW_PB*) unterscheiden.

2. Überwachungssystem (100) nach Anspruch 1, wobei die zweite speicherprogrammierbare Steuerung (SPS2) auf einer Recheneinheit (CPU) virtuell realisiert ist.

3. Überwachungssystem (100) nach einem der vorhergehenden Ansprüche, weiter umfassend eine Simulationseinheit (105), die derart eingerichtet ist, das technische System (TS) mittels einer computergestützten Simulation zu simulieren.

4. Überwachungssystem (100) nach einem der vorhergehenden Ansprüche, wobei die Analyseeinheit (103) eingerichtet ist, die erste Prüfsumme (HW_PB) und die zweite Prüfsumme (HW_PB*) für einen definierten Zeitraum des Programms zu vergleichen.

5. Überwachungssystem (100) nach einem der vorhergehenden Ansprüche, wobei die erste Prüfsumme (HW_PB) und die zweite Prüfsumme (HW_PB*) mittels des Luhn-Algorithmus gebildet werden.

6. Überwachungssystem (100) nach einem der vorhergehenden Ansprüche, wobei die erste Prüfsumme (HW_PB) und die zweite Prüfsumme (HW_PB*) bei mehr als einem Funktionsaufruf in einem Baustein über eine Aneinanderreihung der Übergabewerte der jeweiligen Funktionsaufrufe gebildet werden.

7. Computerimplementiertes Verfahren zur Überwachung einer ersten speicherprogrammierbaren Steuerung (SPS1) zum Steuern eines technischen Systems (TS), wobei die erste speicherprogrammierbare Steuerung (SPS1) ein erstes Programm (P) aus einer Vielzahl von Bausteinen umfasst, mit den Verfahrensschritten:
• Bilden (S1) einer ersten Prüfsumme (HW_PB) über mindestens einen Übergabewert und/oder einen Zustand eines ersten Bausteins des ersten Programms,
• Bilden (S2) einer zweiten Prüfsumme (HW_PB*) über mindestens einen Übergabewert und/oder einen Zustand eines dem ersten Baustein entsprechenden zweiten Bausteins eines zweiten Programms einer zweiten speicherprogrammierbaren Steuerung, wobei die zweite speicherprogrammierbare Steuerung betriebsparallel zur ersten speicherprogrammierbaren Steuerung betrieben wird und das zweite Programm dem ersten Programm entspricht,
• Vergleichen (S3) der ersten Prüfsumme (HW_PB) mit der zweiten Prüfsumme (HW_PB*),
• Ausgeben (S4) eines Vergleichsergebnisses (CR),
und
• Ausgeben (S5) einer Warnmeldung für die erste speicherprogrammierbare Steuerung, falls sich die erste Prüfsumme und die zweite Prüfsumme unterscheiden.

8. Verfahren nach Anspruch 7, wobei die Überwachung von Bausteinen eines ersten Programms gemäß einer Hierarchiestruktur dieser Bausteine durchgeführt wird.

9. Computerprogrammprodukt, das direkt in einen programmierbaren Computer ladbar ist, umfassend Programmcodeteile, die dazu geeignet sind, die Schritte des Verfahrens nach Anspruch 8 oder 9 durchzuführen.
